# EUROPÄISCHE PATENTSCHRIFT

(11) **EP 2 644 804 B1**
(45) Veröffentlichungstag und Bekanntmachung des Hinweises auf die Patenterteilung: **16.11.2016**
(21) Anmeldenummer: 13160451.4
(22) Anmeldetag: 21.03.2013
(51) Int. Cl.: E04G 21/30, E04G 21/24, B32B 5/02, B32B 5/06, B32B 5/22, B32B 5/24, B32B 5/26, B32B 29/02, B32B 29/08, B32B 3/28

(54) **Schutzlaminatstruktur zum Schutz von Fussböden**
Protection laminate structure for protecting floors
Structure de laminé de protection pour la protection des planchers

(30) Priorität: 28.03.2012 CH 4372012
(43) Veröffentlichungstag der Anmeldung: 02.10.2013
(73) Patentinhaber: Fritz Landolt Aktiengesellschaft, 8752 Näfels (CH)
(72) Erfinder: Schwitter, Eugen, 8753 Mollis (CH); Schindler, Martin, 8756 Mitlödi (CH); Stieger, Paul, 9451 Kriessern (CH)
(74) Vertreter: Schneider Feldmann AG Patent- und Markenanwälte

(56) Entgegenhaltungen:
- GB-A- 494 301
- Fritz Landolt Ag: "Technical data Floorliner", Näfels, Switzerland, 21. Februar 2012 (2012-02-21), Seite 1, XP055139263, FRITZ LANDOLT AG Bahnofstrasse 35 CH-8752 Näfels, SWITZERLAND Gefunden im Internet: URL:http://www.landolt.com/docs_pdf-en/ind oor/floorliner/TechnicalSheet_FloorlinerTM _Original.pdf [gefunden am 2014-09-10]

## Beschreibung

### Technisches Gebiet

Die vorliegende Erfindung beschreibt eine Schutzlaminatstruktur zum Schutz von Fussböden, umfassend mindestens eine Vlieslage aus Textilfasern auf deren erster Oberfläche eine Bodenkontaktlage flächig aufgebracht ist und auf deren zweiter Oberfläche eine Schutzlage flächig aufgebracht ist, wobei die Schutzlaminatstruktur mit der Bodenkontaktlage auf dem Fussboden temporär mehrfach verwendbar auslegbar ist und vom Fussboden nach Gebrauch wieder rückstandsfrei ablösbar ist und die Verwendung einer derartigen Schutzlaminatstruktur.

### Stand der Technik

Seit längerem sind Schutzlaminatstrukturen, umfassend mindestens eine Lage aus einem Vlies bekannt, welche zum temporären Auslegen auf Fussböden verschiedener Arten eingesetzt werden. Derartige Schutzlaminatstrukturen dienen als Schutz- oder Abdeckstruktur zum Schutz eines frisch erstellten Fussbodens bzw. zur Schonung eines bestehenden Fussbodens. Es wird ein mechanischer Schutz durch Betreten oder das Transportieren von Gegenständen erreicht.

Das Dokument GB494301 offenbart alle technischen Merkmale des Oberbegriffs des Anspruchs 1

Eine Mehrzahl derartiger Schutzlaminatstrukturen wird von der Anmelderin unter dem Markennamen "Floorliner" in unterschiedlichen Ausführungsformen vertrieben. Diese Schutzlaminatstrukturen sind mehrfach verwendbar und werden auf dem zu schützenden Fussboden in der Regel von einer Rolle abgerollt, temporär ausgebreitet und haften auf dem zu schützenden Fussboden.

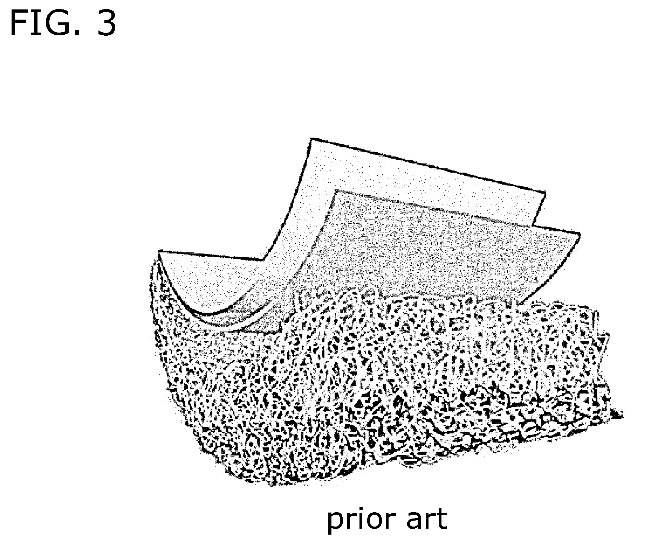

In der Figur 3 ist eine aus dem Stand der Technik bekannte Schutzlaminatstruktur dargestellt, die mindestens eine Vlieslage aus Synthesefasern umfasst, welche extraleicht ausgeführt ist und mechanische Belastungen abdämpfen kann, sodass der Fussboden gegen mechanische Einflüsse geschützt ist und Stösse durch Tritte oder Kontakt mit schweren Gegenständen, die über die Schutzlaminatstruktur bewegt werden abgedämpft werden.

Die bekannte Schutzlaminatstruktur weist neben der Vlieslage eine Bodenkontaktlage auf, welche auf einer dem Fussboden später zugewandten ersten Oberfläche der Vlieslage aufgebracht ist. Damit ist eine haftende Lagerung der Schutzlaminatstruktur auf Fussböden aus unterschiedlichen Materialien gewährleistet und ein aktiver Gleitschutz erreicht. Wann und ob ein Fussboden mit den bekannten Schutzlaminatstrukturen belegt werden kann, hängt vom jeweiligen Fussboden und der Feuchtigkeit des Bodens ab. Eine solche Schutzlaminatstruktur kann auf Parkett- Ton-, Keramik-, Stein- oder auch Teppichböden verlegt werden, wobei die rutschhemmende Wirkung der Bodenkontaktlage ein ungewünschtes Verschieben verhindert. Da die Bodenkontaktlage nicht stoffschlüssig mit dem Fussboden verklebt kann die Schutzlaminatstruktur später rückstandsfrei wieder abgelöst werden. Als Bodenkontaktlage wird ein Haftstoff eingesetzt, in welchem die Synthesefasern der Vlieslage getränkt werden, wodurch sich der Haftstoff mit den Synthesefasern fest verbindet. Es resultiert eine Bodenkontaktlage als dauerhafte Antirutsch-Beschichtung, die nicht mit der Oberfläche des Fussbodens verklebt.

Die bekannte Schutzlaminatstruktur ist auf ihrer zweiten Oberfläche, die der mechanischen Einwirkung zugewandt ist, mit mindestens einer Schutzlage versehen, die aufkaschiert ist. Diese kann flüssigkeitsdicht sein, sodass keine Feuchtigkeit von der Schutzlage durch die Vlieslage dringen kann, was den Fussboden gegen zusätzliche Feuchtigkeit schützt. Damit ein Fussboden mit geringer Restfeuchtigkeit während der Zeit der Auflage der Schutzlaminatstruktur trocknen kann, kann eine Schutzlage verwendet werden, die flüssigkeitsdicht und dampfoffen ist, sodass Feuchtigkeit abgeführt werden kann. Es sind auch Feuchtigkeitsabsorbierende Schutzlagen möglich, welche auf der zweiten Oberfläche verschüttete Flüssigkeiten z.B. Farben absorbieren und eine Verschmutzung des Fussbodens verhindern.

Neben einer schnellen und faltenfreien Auslegung ist die Unfallverhütung aufgrund der rutschhemmenden Wirkung der Schutzlaminatstruktur von Vorteil, wobei der Fussboden vor mechanischen Einflüssen und der Benetzung mit Flüssigkeiten geschützt ist.

Nachteilig ist an den bekannten Schutzlaminatstrukturen, dass der Fussboden erst damit belegt werden kann, wenn der Fussboden ausreichend trocken ist, bzw. die Restfeuchtigkeit einen gewissen Wert unterschreitet. Überschussfeuchtigkeit oder Restfeuchtigkeit muss dem Fussboden soweit entzogen worden sein, dass die Schutzlaminatstruktur die Feuchtigkeit nicht durch die Vlieslage aufsaugt. Schon wenn die Bodenkontaktlage zu feucht wird, verklebt die Bodenkontaktlage mit der Oberfläche des Fussbodens, sodass die Schutzlaminatstruktur nicht mehr rückstandsfrei vom Fussboden entfernt werden kann.

Heute werden vermehrt wieder naturbelassene Holzböden verlegt, die nach dem Auslegen vor Ort geölt oder anderweitig feucht nachbehandelt werden. Vor dem Betreten eines nachbehandelten Holzbodens muss dieser in der Regel drei bis vier Tage trocknen. Es kann ansonsten zu einer Reaktion der Bodenkontaktlage mit der Oberfläche des Fussbodens kommen, wenn die Trocknungszeiten nicht abgewartet werden. Wird die Schutzlaminatstruktur mit ihrer Bodenkontaktlage auf dem feuchten geölten Fussboden ausgelegt, sind Veränderungen in der Oberfläche des Fussbodens in Form von Verfärbungen oder Maserungen die Folge, da beispielsweise das Öl durch Reaktion mit der Bodenkontaktlage ungleich verteilt wird bzw. stellenweise abgeführt wird.

Bei längerer Auflage auf einem nicht ausreichend abgetrockneten geölten Holzboden kann es dazu kommen, dass die Bodenkontaktlage und/oder die Vlieslage Öl durch Diffusion aufnimmt und im Vlies oder der Bodenkontaktlage speichert. Entsprechend bildet sich ein Ölfilm auf der Bodenkontaktlage aus und/oder Öl diffundiert in die Vlieslage der Schutzlaminatstruktur hinein. Bei einer späteren nochmaligen Benutzung der Schutzlaminatstruktur auf einem anderen Fussboden kann dieser Ölfilm bzw. die gespeicherte Menge Öl ungewünscht austreten und sich auf dem Fussboden verteilen. Damit ist die Wiederverwendbarkeit stark eingeschränkt.

Da gerade in der Bauindustrie unter enormen Zeitdruck gearbeitet wird, sind lange Wartezeiten nur schwer einzuhalten und ein möglichst frühes Betreten der Fussböden erwünscht. Aus Kostengründen ist eine Wiederverwendbarkeit der Schutzlaminatstruktur wünschenswert, was je nach Wahl des Fussbodens kaum erreichbar ist.

Es ist gewünscht, dass die Schutzlaminatstruktur möglichst schnell auf dem behandelten Fussboden ausgelegt werden kann, wobei eine rutschfeste Schutzunterlage gewährleistet ist, welche weder mit dem Fussboden verklebt noch zu einer Verfärbung des Fussbodens führt.

### Darstellung der Erfindung

Die vorliegende Erfindung hat sich zur Aufgabe gestellt eine Schutzlaminatstruktur zu schaffen, welche einfach auf einem Fussboden mit einer erhöhten Restfeuchte auslegbar ist, wobei die Schutzlaminatstruktur rückstandsfrei ohne Spuren auf dem Fussboden zu hinterlassen nach temporärem Gebrauch ablösbar ist.

Mit der hier offenbarten Schutzlaminatstruktur gemäß Anspruch 1 und die Verwendung einer Schutzlaminatstruktur gemäss Anspruch 10, ist eine Wiederverwertbarkeit selbst dann erreichbar, wenn die Schutzlaminatstruktur auf einem geölten Holzboden verlegt wurde, welcher nicht vollständig durchgetrocknet ist.

Zur Lösung dieser Aufgabe wird eine mehrlagige Schutzlaminatstruktur vorgeschlagen, welche neben einer mechanisch dämpfenden Vlieslage eine dem Fussboden zuwendbare Bodenkontaktlage aufweist, welche aus einem gekreppten oder gestauchten Papier hergestellt ist. Durch Verwendung des Krepppapiers ist eine erhöhte Aufnahme von Flüssigkeit erreichbar, die im erhöhten Mass im Krepppapier gehalten wird.

### Kurze Beschreibung der Zeichnungen

Ein bevorzugtes Ausführungsbeispiel des Erfindungsgegenstandes wird nachstehend im Zusammenhang mit den anliegenden Zeichnungen beschrieben.

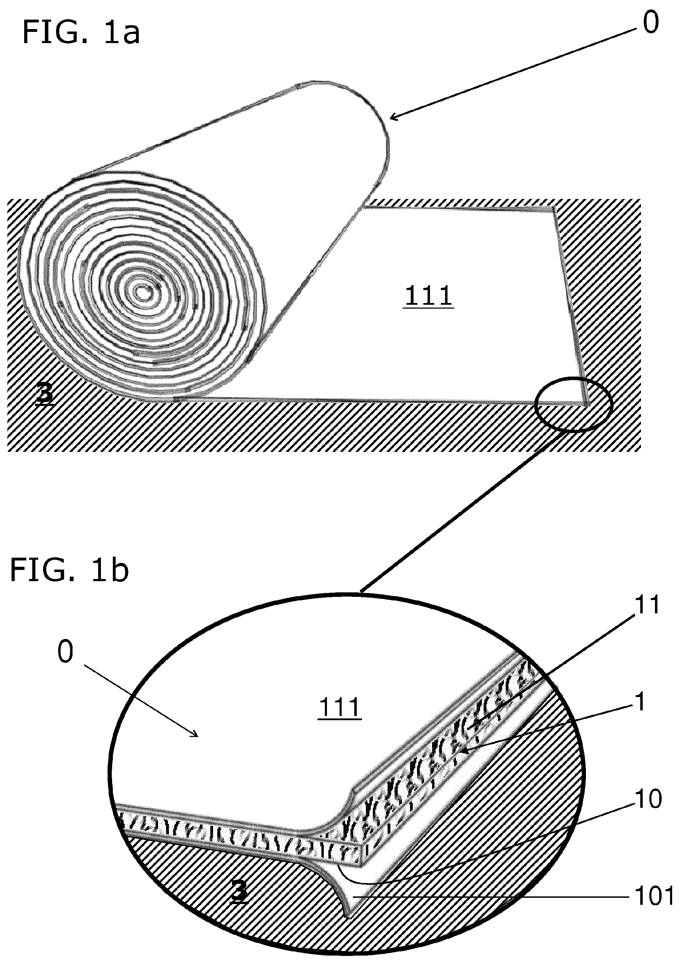

- Figur 1a: zeigt eine perspektivische schematische Ansicht einer Schutzlaminatstruktur in Form einer Rolle, die teilweise abgerollt und auf einem Fussboden ausgerollt ist, während
- Figur 1b: eine perspektivische Detailansicht der Ecke der Schutzlaminatstruktur gemäss Figur 1a zeigt.
- Figur 2a: zeigt eine Aufsicht auf eine Bodenkontaktlage, umfassend gekrepptes Papier, während
- Figur 2b: einen Ausschnitt der Bodenkontaktlage gemäss Figur 2a in einer Aufsicht zeigt, wobei die Dehnfähigkeit der Bodenkontaktlage in Bereich X verdeutlicht ist und
- Figur 2c: eine Schnittansicht entlang der Strecke C-C von Figur 2b zeigt, wobei die Rauigkeit der Bodenkontaktlage deutlich wird.
- Figur 3: zeigt eine perspektivische schematische Darstellung des bekannten Stands der Technik der Schutzlaminatstrukturen.

Die hier offenbarte mehrfach verwendbare Schutzlaminatstruktur 0 stellt ein Flächengebilde dar, welches üblicherweise zu einer Rolle aufgerollt vertrieben wird. Damit kann die Schutzlaminatstruktur 0 einfach von der Rolle auf einen Fussboden 3 abgerollt werden. Bevorzugt ist der Fussboden 3 ein Holzfussboden, der feucht in der Regel mittels Ölen nachbehandelt wurde. Das die Schutzlaminatstruktur 0 auf Fussböden 3 mit hoher Restfeuchte bevorzugt aufbringbar ist, wird bei geölten Holzfussböden besonders gut deutlich. Die Schutzlaminatstruktur 0 ist aber auch auf Parkett-Ton-, Keramik-, Stein- oder auch Teppichböden verlegbar und kann dort ihre schützende Wirkung entfalten. Nach Gebrauch kann die Schutzlaminatstruktur 0 wieder platzsparend und einfach aufgerollt werden und für den nächsten Gebrauch vorbereitet werden. In der Regel werden fünfzig Meter der Schutzlaminatstruktur 0 zu Rollen mit Rollenbreiten von ein oder zwei Metern vertrieben. Die Schutzlaminatstruktur 0 kann somit einfach, faltenfrei und schnell entlang genügend breiten Pfaden ausgelegt werden.

Die Schutzlaminatstruktur 0 umfasst eine Vlieslage 1, welche aus Synthesefasern hergestellt ist. Die Vlieslage 1 dämpft Tritte und Stösse gegen den Fussboden 3 ab, sodass der Fussboden 3 gegen mechanische Einwirkungen geschützt wird. Dieser Schutz ist bei frisch verlegten Fussböden 3, welche feucht nachbehandelt worden sind besonders wichtig. Aber auch wenn ein seit längerem bestehender Fussboden mit Schuhen betreten wird oder schwere Gegenstände über diesen transportiert werden, ist es sinnvoll die Schutzlaminatstruktur 0 temporär auszurollen.

Die Vlieslage 1 kann unterschiedliche Vliese umfassen, besonders vorteilhaft ist die Verwendung eines mechanisch veredelten Stapelvlieses aus Synthesefasern. Die verwendeten Vlieslagen 1 weisen eine flächenbezogene Masse von 75 g/m² bis 200 g/m² auf, wobei die flächenbezogene Masse der gesamten Schutzlaminatstruktur 0 aufgrund der zusätzlichen Lagen geringfügig höher liegt. Die Stärke oder Dicke der Vlieslage 1 beträgt mindestens einen Millimeter, sodass mechanische Einwirkungen gedämpft werden können und die resultierende Schutzlaminatstruktur 0 aufrollbar ist. Zur Verfestigung der Vlieslage 1 ist es vorteilhaft, wenn das Vlies der Vlieslage 1 mechanisch nachbearbeitet wird. Dazu wird in der Regel eine mechanische Vernadelung des Stapelfaservlieses durchgeführt, wodurch die lose zusammenliegenden Fasern der Vlieslage 1 teilweise ausgerichtet und miteinander verbunden werden, wodurch die gewünschte Verfestigung ausbildbar ist. Verwendbare Materialien für die Fasern der Vlieslage 1 sind beispielsweise Polyethylen (PE) und Polypropylen (PP), oder Polyester (PES), Polyethylenterephthalat (PET), Polyamid (PA), Polyimid (PI), Polyvinylchlorid (PVC), Polyurethan (PU) oder Polyacryl (PAN). Auch der Einsatz von Naturfasern, wie beispielsweise Hanf, Flachs oder Jute ist möglich. Mittels bekannter Verfahren werden zuerst Fasern hergestellt, welche anschliessend zu einer Vlieslage gelegt werden. Durch eine daran anschliessende optionale Nachbearbeitung durch mechanisches Vernadeln oder Wasserstrahlbehandlung, kann die Vlieslage 1 verfestigt werden. Es ist alternativ auch eine Verfestigung durch Kalandrieren mittels eines Doppelbandofens möglich.

Eine erste Oberfläche 10 der Vlieslage 1 ist mit einer Bodenkontaktlage 101 versehen, welche auf die erste Oberfläche 10 aufkaschiert oder flächig aufgeklebt ist. Die Bodenkontaktlage 101 bedeckt die gesamte erste Oberfläche 10 und im ausgelegten Zustand ist die erste Oberfläche 10 dem Fussboden 3 zugewandt, wobei die Bodenkontaktlage 101 auf dem Fussboden 3 aufliegt.

Auf einer zweiten Oberfläche 11 der Vlieslage 1, welche im ausgelegten Zustand dem Fussboden 3 abgewandt ist, ist eine Schutzlage 111 angebracht. Diese kann ebenfalls aufkaschiert oder aufgeklebt sein. Die Schutzlage 111schützt die Schutzlaminatstruktur 0 bzw. die Vlieslage 1 gegen die Einwirkungen von Flüssigkeiten. Insbesondere ist die Schutzlage 111 aus flüssigkeitsundurchlässigem Material oder einem flüssigkeitsabsorbierenden Material ausgebildet, sodass jede Form von Flüssigkeit von der Vlieslage 1 und letztlich vom Fussboden 3 ferngehalten werden kann. Um ein Abtrocknen eines Fussbodens 3 mit Restfeuchte zu gewährleisten kann die Schutzlage 111 dampfoffen ausgestaltet sein.

Die Bodenkontaktlage 101, die im ausgerollten Zustand der Schutzlaminatstruktur 0 dem Fussboden 3 zugewandt ist, umfasst hier Papier, wobei das Papier gekreppt oder gestaucht sein muss.

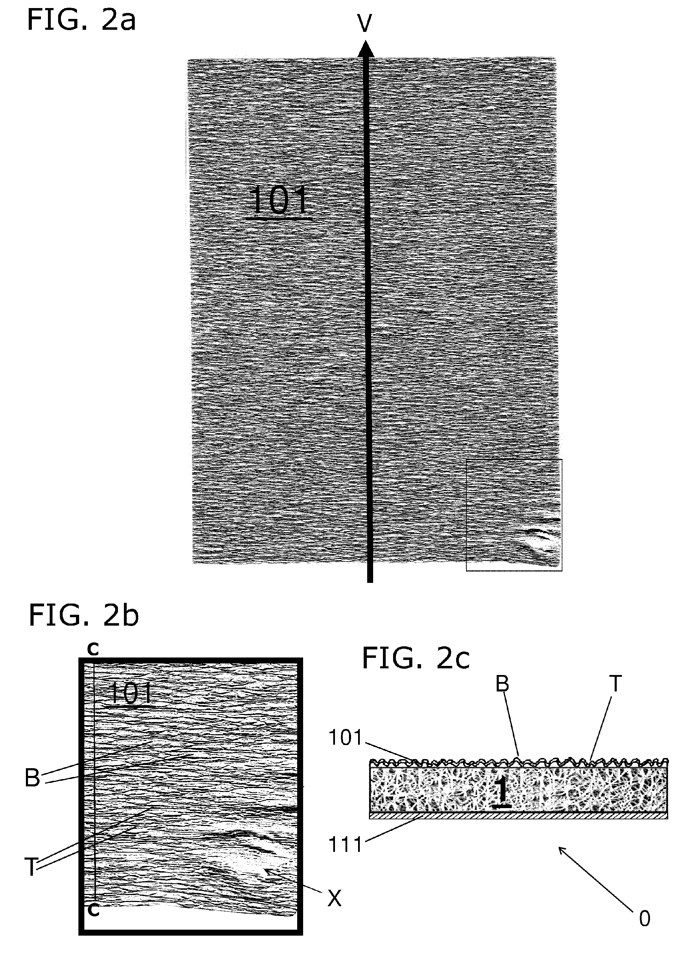

Wie in Figur 2a erkennbar wird die erste Oberfläche 10 flächig mit der Bodenkontaktlage 101 aus gekrepptem Papier versehen. Dieses Papier wird aufgeklebt oder aufkaschiert, wobei verschiedene Verfahren verwendbar sind. Üblicherweise und kostengünstig ist das Nasskaschieren der Bodenkontaktlage 101 aus Papier mittels geeigneten Klebstoffs auf die erste Oberfläche 10.

Durch die Kreppung des Papiers bildet sich eine gestauchte Papierlage aus, wobei unterschiedliche Bereiche der Papieroberfläche unterschiedlich in eine Vorzugsrichtung V gestaucht sind. In Querrichtung und damit senkrecht zur Vorzugsrichtung V, welche in der Regel die Aufrollrichtung der Schutzlaminatstrukturrollen ist, bilden sich Kreppfalten T aus. Das Ergebnis ist eine raue oder körnige Oberfläche der Bodenkontaktlage 101, wobei eine stark vergrösserte Oberfläche durch die Kreppung erreicht wird. Die Oberfläche der Bodenkontaktlage 101 bildet Berge B und Täler T in benachbarten Papierbereichen entlang der Vorzugsrichtung V aus, wobei sich die Berge B und Täler T abwechseln, was Figur 2c entnehmbar ist. Die Kreppfalten T, welche die Täler T darstellen und benachbarte Berge B werden beim Kreppvorgang abwechselnd und zufällig angeordnet. Der Abstand jeweils benachbarter Berge B und Täler T ist zufällig und unregelmässig ausgebildet.

Aufgrund der Rauigkeit der Bodenkontaktlage 101 umfassend Krepppapier mit vergrösserter Oberfläche weist die Bodenkontaktlage 101 eine erhöhte Dehnbarkeit und Flüssigkeitsabsorption auf. Versuche haben gezeigt, dass die Bodenkontaktlage 101 in Vorzugsrichtung V um ein Minimalverhältnis dehnbar sein muss, um Schutzlaminatstrukturen 0 mit gewünschten Eigenschaften zu erreichen. Die Kreppung wird auch als Kreppfaktor bezeichnet, welcher entsprechend einen minimalen Wert aufweisen muss, was zu einem um das Minimalverhältnis gekreppten oder gestauchten Krepppapier als Bodenkontaktlage 101 führt. Die besten Ergebnisse wurden bei einem Kreppfaktor von mindestens annähernd 50% erreicht. Dabei wies die hergestellte Schutzlaminatstruktur 0 eine Vlieslage 1 von etwa 2mm Dicke auf, und die Dicken der Bodenkontaktlage 101 sowie der Schutzlage 111 waren 0.1 mm bis maximal 0.5 mm dick gewählt. Auch ein Kreppfaktor von etwa 30% bzw. von etwa 20% führt zu gewünschten Eigenschaften der Schutzlaminatstruktur 0. Die Bodenkontaktlage 101 aus einem gekreppten Papier haftet ohne Beschichtung auf dem Fussboden 3. Die Haftung wird durch die Struktur der Bodenkontaktlage 101 aufgrund der Rauigkeit und der Saugfähigkeit der Oberfläche des Krepppapiers erzielt. Bei einem Kreppfaktor von unter 20% sind die Rauigkeit und die Saugfähigkeit entsprechend vermindert und die Schutzlaminatstruktur 0 nur noch vermindert dehnbar sodass die Wirkung auf einem geölten Holzboden verschlechtert ist. Das Ankleben der Bodenkontaktlage 101 wird verhindert, sodass ein rückstandsfreies Entfernen der Bodenkontaktlage 101 möglich ist.

In Figur 2b in der rechten unteren Bildecke ist ein Bereich der Bodenkontaktlage 101 erkennbar, der mit einem Tropfen Wasser benetzt wurde. Das Krepppapier saugt die Flüssigkeit auf und dehnt sich aus. Je nach Grad der Benetzung oder Befeuchtung dehnt sich die Bodenkontaktlage 101 umfassend das Krepppapier unterschiedlich stark in Vorzugsrichtung V aus. Dabei kann die Dehnung maximal zur vollständigen Glättung der Krepppapierlage führen. Dabei werden die Kreppfalten bzw. die Berg-Talstruktur bereichsweise vollständig beseitigt, was in Bereich X aus Figur 2b erkennbar ist. Das Papier der Bodenkontaktlage 101 kann die Flüssigkeit vom Fussboden mindestens teilweise aufnehmen und halten. Durch die Aufnahme der Flüssigkeit dehnt sich die Bodenkontaktlage 101 aus. Dies ist aufgrund der erhöhten Dehnfähigkeit aufgrund der Kreppung möglich. Selbst bei Einwirkung der Flüssigkeit und anschliessende Dehnung der Bodenkontaktlage 101 bleibt die Haftwirkung der Schutzlaminatstruktur bestehen.

Durch die Ausgestaltung der Bodenkontaktlage 101 mittels Krepppapier kann die Schutzlaminatstruktur 0 auf einen Fussboden 3 mit höherer Restfeuchte gelegt werden. Ein Teil der Flüssigkeit kann von der Haftschicht 101 aufgenommen werden, wobei sich die Haftschicht 101 dehnt. Die Vlieslage 1 kann aufgrund ihrer Flexibilität der Dehnung der Bodenkontaktlage 101 in einem gewissen Umfang folgen, wobei die Haftung der Schutzlaminatstruktur 0 auf dem Fussboden 3 immer gewährleistet ist. Das Krepppapier reagiert nicht oder verklebt nicht mit der Oberfläche des Fussbodens 3 und verhindert ein diffundieren der Flüssigkeit in die Vlieslage 1.

Um die Bodenkontaktlage 101 zusätzlich nassfest zu machen und die Diffusion von Flüssigkeiten zur Vlieslage 1 zusätzlich zu verhindern, kann das Krepppapier beispielsweise mit Harzen nachbehandelt werden. Damit bei Aufnahme von Flüssigkeiten ein Verfärben des Krepppapiers ausgeschlossen ist und entsprechend die Möglichkeit für das Abfärben auf den Fussboden 3 beseitigt ist, sollte ungefärbtes oder gebleichtes Krepppapier verwendet werden.

Versuche mit einlagigem einfachem Krepppapier als Bodenkontaktlage 101 haben gute Ergebnisse erzielt. Ein geölter Holzfussboden 3 konnte bereits nach einem Tag Trocknung mit der Schutzlaminatstruktur 0 belegt werden, welche später rückstandsfrei ablösbar war und keine Spuren auf der Oberfläche des Holzfussbodens hinterlassen hat. Es ist aber auch möglich mehrlagiges Krepppapier als Bodenkontaktlage 101 zu verwenden bzw. mehrere Bodenkontaktlagen 101 aus einlagigem Krepppapier zu verwenden.

Vorteilhaft an der Verwendung von Krepppapier als Bodenkontaktlage 101 ist die einfache und umweltschonende Entsorgbarkeit des Krepppapiers, da dieses recycelbar oder kompostierbar ist.

### Bezugszeichenliste

- 0: Schutzlaminatstruktur
- 1: Vlieslage
10 erste Oberfläche
101 Bodenkontaktlage
B Berg
T Kreppfalte/Tal
R Vorzugsrichtung
X geglätteter Bereich
11 zweite Oberfläche
111 Schutzlage
- 3: Fussboden

## Patentansprüche

1. Schutzlaminatstruktur (0) zum Schutz von Fussböden (3), umfassend
mindestens eine Vlieslage (1) aus Textilfasern auf deren erster Oberfläche (10) eine Bodenkontaktlage (101) flächig aufgebracht ist
und auf deren zweiter Oberfläche (11) eine Schutzlage (111) flächig aufgebracht ist, wobei die Schutzlaminatstruktur (0) mit der Bodenkontaktlage (101) auf dem Fussboden (3) temporär mehrfach verwendbar auslegbar ist und vom Fussboden (3) nach Gebrauch wieder rückstandsfrei ablösbar ist, wobei die Bodenkontaktlage (101) mindestens eine Lage gekrepptes Papier umfasst, **dadurch gekennzeichnet dass** die Bodenkontaktlage (101) gekrepptes Papier mit einem Kreppfaktor von mindestens 20% umfasst, welches auf der ersten Oberfläche (10) der
Vlieslage (1) lagert, wobei die Bodenkontaktlage (101) auf der Vlieslage (1) aufgeklebt oder aufkaschiert ist, wobei die Bodenkontaktlage (101) ohne Beschichtung auf dem Fußboden (3) haftet und eine Flüssigkeitsabsorption durch die Bodenkontaktlage (101) erreichbar ist.

2. Schutzlaminatstruktur (0) nach Anspruch 1, wobei die Bodenkontaktlage (101) mehrlagiges Krepppapier umfasst.

3. Schutzlaminatstruktur (0) nach Anspruch 1, wobei der Kreppfaktor grösser als 30%, insbesondere mindestens annähernd 50% ist.

4. Schutzlaminatstruktur (0) nach Anspruch 1, wobei die Dicke der Vlieslage (1) mindestens annähernd 2 mm beträgt und die Bodenkontaktlage (101) sowie die Schutzlage (111) maximal 0.5 mm dick sind.

5. Schutzlaminatstruktur (0) nach Anspruch 1, wobei die Vlieslage (1) eine flächenbezogene Masse von 75 g/m2 bis 200 g/m2 aufweist und die flächenbezogene Masse der gesamten Schutzlaminatstruktur (0) aufgrund der zusätzlichen Lagen (101, 111) höher liegt.

6. Schutzlaminatstruktur (0) gemäss Anspruch 1, wobei die Bodenkontaktlage (101) aus ungefärbtem oder gebleichtem Krepppapier besteht.

7. Schutzlaminatstruktur (0) gemäss Anspruch 1, wobei die Bodenkontaktlage (101) durch Behandlung des Krepppapiers mit einem Harz zusätzlich gegen Feuchtigkeit verfestigt ist.

8. Schutzlaminatstruktur (0) nach Anspruch 1, wobei die Schutzlage (111) wasserabweisend oder feuchtigkeitsabsorbierend ist, und stoffschlüssig mit der Vlieslage (1) verbunden ist.

9. Schutzlaminatstruktur (0) gemäss Anspruch 8, wobei die Schutzlage (111) atmungsaktiv bzw. dampfdurchlässig ist.

10. Verwendung einer Schutzlaminatstruktur (0) umfassend mindestens eine Vlieslage (1) aus synthetischen Fasern auf deren erster Oberfläche (10) eine Bodenkontaktlage (101) flächig aufgeklebt oder aufkaschiert ist
und auf deren zweiter Oberfläche (11) eine Schutzlage (111) flächig aufgebracht ist, wobei die Bodenkontaktlage (101) mindestens eine Lage gekrepptes Papier mit einem Kreppfaktor von mindestens 20% umfasst,
zur temporären wieder verwendbaren Bedeckung von Fussböden (3) zum Schutz vor mechanischen Einwirkungen und Befeuchtung mit Flüssigkeit, so dass die Bodenkontaktlage (101) direkt auf dem Fußboden (3) ohne Beschichtung haftet, eine Flüssigkeitsabsorption aufweist und rückstandsfrei wieder vom Fussboden (3) ablösbar ist.

## Claims

1. A protection laminate structure (0) for the protection of floors (3)
comprising
at least one non-woven fabric layer (1) of textile fibres
on the first surface (10) of which a floor contact layer (101) is two-dimensionally applied
and on the second surface (11) of which a protection layer (111) is two-dimensionally applied, wherein the protection laminate structure (0) with the floor contact layer 101) can be temporarily laid on the floor (3) in a multiply usable manner and after use can be removed from the floor (3) again without leaving residues,
wherein the floor contact layer (101) comprises at least one layer of crepe paper, **characterised in that** the floor contact layer (101) comprises crepe paper with a crepe factor of at least 20 %,
which lies on the first surface (10) of the non-woven fabric layer (1), wherein the floor contact layer (101) is adhered or laminated onto the non-woven fabric layer (1), wherein the floor contact layer (101) adheres to the floor (3) without a coating and fluid absorption is achievable through the floor contact layer (101).

2. The protection laminate structure (0) according to claim 1, wherein the floor contact layer comprises (101) multiple-layer crepe paper.

3. The protection laminate structure (0) according to claim 1, wherein the crepe factor is greater than 30 %, in particular at least approximately 50 %.

4. The protection laminate structure (0) according to claim 1, wherein the thickness of the non-woven fabric layer (1) is at least approximately 2 mm and the floor contact layer (101) as well as the protection layer (111) are maximally 0.5 mm thick.

5. The protection laminate structure (0) according to claim 1, wherein the non-woven fabric layer (1) has an area density of 75 g/m² to 200 g/m² and the area density of the entire protection laminate structure (0) is greater due to the additional layers (101, 111).

6. The protection laminate structure (0) according to claim 1, wherein the floor contact layer (101) is made of undyed or bleached crepe paper.

7. The protection laminate structure (0) according to claim 1, wherein the floor contact layer (101) is additionally reinforced against moisture through treating the crepe paper with a resin.

8. The protection laminate structure (0) according to claim 1, wherein the protection layer (111) is water-repellent or moisture-absorbent and connected to the non-woven fabric layer (1) in a bonded manner.

9. The protection laminate structure (0) according to claim 8, wherein the protection layer (111) is breathable or vapour-permeable.

10. Use of a protection laminate structure (0) comprising at least one non-woven fabric layer (1) of synthetic fibres, onto the first surface (10) of which a floor contact layer (101) is two-dimensionally adhered or laminated
and onto the second surface (11) of which a protective layer (111) is two-dimensionally applied, wherein the floor contact layer (101) comprises at least one layer of crepe paper with a crepe factor of at least 20 %,
for the temporary reusable covering of floors (3) to protect against mechanical effects and moistening with liquids so that the floor contact layer (101) adheres directly to the floor (3) without a coating, exhibits fluid absorption and can be detached from the floor (3) again without leaving residues.

## Revendications

1. Structure laminée protectrice (0) destinée à protéger des sols (3), comprenant
au moins une couche de non-tissé (1) en fibres textiles,
sur la première surface (10) de laquelle une couche de contact (101) avec le sol est appliquée en nappe
et sur la deuxième surface de laquelle (11), une couche protectrice (111) est appliquée en nappe, par la couche de contact (101) avec le sol (3), la structure laminée protectrice (0) à usage multiple pouvant être temporairement posée sur le sol (3) et après usage, pouvant être de nouveau retirée du sol, sans laisser de résidus,
la couche de contact (101) avec le sol comprenant au moins une couche de papier crêpé, **caractérisée en ce que** la couche de contact (101) avec le sol comprend du papier crêpé avec un coefficient de crêpage d'au moins 20 %,
lequel est logé sur la première surface (10) de la couche de non-tissé (1), la couche de contact (101) avec le sol étant collée ou contrecollée sur la couche de non-tissé (1), la couche de contact (101) avec le sol adhérant au sol (3) sans revêtement et une absorption de liquide par la couche de contact (101) avec le sol pouvant être obtenue.

2. Structure laminée protectrice (0) selon la revendication 1, la couche de contact (101) avec le sol comprenant du papier crêpé multicouches.

3. Structure laminée protectrice (0) selon la revendication 1, le coefficient de crêpage étant supérieur à 30 %, notamment au moins proche de 50%.

4. Structure laminée protectrice (0) selon la revendication 1, l'épaisseur de la couche de non-tissé (1) étant au moins proche de 2 mm et la couche de contact (101) avec le sol, ainsi que la couche protectrice (111) ayant une épaisseur maximale de 0,5 mm.

5. Structure laminée protectrice (0) selon la revendication 1, la couche de non-tissé (1) présentant un grammage de 75 g/m² à 200g/m et le grammage de l'ensemble de la structure laminée protectrice (0) étant supérieur, du fait des couches (101, 111) supplémentaires.

6. Structure laminée protectrice (0) selon la revendication 1, la couche de contact (101) avec le sol étant constituée de papier crêpé incolore ou blanchi.

7. Structure laminée protectrice (0) selon la revendication 1, la couche de contact (101) avec le sol étant consolidée en sus contre l'humidité par traitement du papier crêpé avec une résine.

8. Structure laminée protectrice (0) selon la revendication 1, la couche protectrice (111) étant hydrofuge ou absorbant l'humidité et étant reliée par matière avec la couche de non-tissé (1).

9. Structure laminée protectrice (0) selon la revendication 8, la couche protectrice (111) étant respirante ou perméable à la vapeur.

10. Utilisation d'une structure laminée protectrice (0) comprenant au moins une couche de non-tissé (1) en fibres synthétiques sur la première surface (10) de laquelle une couche de contact (101) avec le sol est collée ou contrecollée en nappe
et sur la deuxième surface (11) de laquelle une couche protectrice 111) est appliquée en nappe, la couche de contact (101) avec le sol comprenant au moins une couche de papier crêpé avec un coefficient de crêpage d'au moins 20 %,
pour le recouvrement temporaire et réutilisable de sols (3) pour les protéger contre des influences mécaniques et de l'humidification par des liquides, de sorte que la couche de contact (101) avec le sol adhère directement au sol (3), sans revêtement, fasse preuve d'une absorption de liquide et puisse être de nouveau retirée sans résidus du sol (3).
